# EUROPEAN PATENT APPLICATION

(11) **EP 2 202 562 A1**
(43) Date of publication of application: **30.06.2010**
(21) Application number: 09015665.4
(22) Date of filing: 18.12.2009
(51) Int. Cl.: G02F 1/13

(54) **LCD module having an asymmetric mold frame**

(30) Priority: 24.12.2008 KR 20080133748
(71) Applicant: Samsung Electronics Co., Ltd., Suwon-si, Gyeonggi-do 442-742 (KR)
(72) Inventor: Park, Hyun-Sung, Asan-si Chungcheongnam-do (KR); You, Jun-Woo, Yongin-si Gyenoggi-do (KR)
(74) Representative: Dr. Weitzel & Partner

(57) **Abstract**

A liquid crystal display (LCD) module includes an LCD panel, and a mold frame (300) receiving the LCD panel, the mold frame comprising a support (320) on which the LCD panel is located, a first guide (311) disposed near a first corner of the mold frame, the first guide (311) receiving a first corner of the LCD panel, and a second guide (314) disposed near a second corner of the mold frame, the second guide (314) receiving a second corner of the LCD panel, wherein the first guide and the second guide are asymmetrical.

## Description

### CROSS-REFERENCE TO RELATED APPLICATION

This application claims priority to Korean application No. 10-2008-0133748 filed on December 24, 2008, the disclosure of which is incorporated herein by reference it its entirety.

### TECHNICAL FIELD

The present disclosure relates to a liquid crystal display (LCD) module, and more particularly, to an LCD module having a mold frame receiving an LCD panel.

### DISCUSSION OF ART

An LCD displays images using liquid crystal material interposed between two insulating substrates. The LCD is used in various electronic devices such as, for instance, TVs, monitors, cellphones, and laptop computers.

An LCD panel comprises two substrates and a liquid crystal material disposed therebetween. An LCD module comprising the LCD panel requires a separate light source which can provide the LCD panel with light. The LCD panel adjusts the light received from the separated light source. The light source can be included in a backlight unit.

When an impact is applied to the LCD module, a corner of the LCD panel can be damaged. As such, a need exists for an LCD module which can minimize the concentration of stress applied to the corners of the LCD panel.

### SUMMARY OF THE INVENTION

According to an exemplary embodiment of the present invention, grooves can be formed at corners of a mold frame in an LCD module.

According to an exemplary embodiment of the present invention, a liquid crystal display (LCD) module comprises an LCD panel, and a mold frame receiving the LCD panel, the mold frame comprising a support on which the LCD panel is located, a first guide disposed near a first corner of the mold frame, the first guide receiving a first corner of the LCD panel; and a second guide disposed near a second corner of the mold frame, the second guide receiving a second corner of the LCD panel, wherein the first guide and the second guide are asymmetrical.

The first guide and the second guide may have a different contour.

The first guide can be disposed near an upper left corner of the mold frame, and the second guide can be disposed near an upper right corner of the mold frame.

A horizontal length of the first guide and a horizontal length of the second guide can be different from each other.

The first guide may comprise a first groove, and the second guide comprises a second groove.

A width of the first groove and a width of the second groove can be different from each other.

A depth of the first groove and a depth of the second groove can be different from each other.

The second guide may further comprise a protrusion disposed apart from the LCD panel by a gap.

According to an exemplary embodiment of the present invention, a mold frame receiving an LCD panel comprises a support on which the LCD panel is located, a first guide disposed near a first corner of the mold frame, the first guide receiving a first corner of the LCD panel, the first guide including a first groove having a first depth and a first width, and an second guide disposed near a second corner of the mold frame, the second guide receiving a second corner of the LCD panel, the second guide including a second groove having a second depth and a second width, wherein the first depth and the second depth are different from each other.

The first width and the second width can be different from each other.

A length of the first guide and a length of the second guide can be different from each other.

The second guide may further comprise a protrusion disposed apart from the LCD panel by a gap.

The mold frame can be disposed between an upper chassis and a lower chassis.

An optical member and a light guiding plate can be disposed behind the LCD panel.

According to an exemplary embodiment of the present invention, a mold frame for receiving an LCD panel, the mold frame comprising a first corner and a second corner, the first corner having a first groove recessed toward the edge of the first corner and the second corner having a second groove recessed toward the edge of the second corner, wherein the first groove is larger than the second groove.

### BRIEF DESCRIPTIONS OF THE DRAWINGS

Exemplary embodiments of the present invention can be understood in more detail from the following descriptions taken in conjunction with the accompanying drawings, in which:
Fig. 1 is an exploded schematic view of an LCD module according to an exemplary embodiment of the present invention;
Fig. 2 is a sectional view taken along the line A-A' of Fig. 1 according to an exemplary embodiment of the present invention;
Fig. 3 is a plan view of a mold frame of an LCD module according to an exemplary embodiment of the present invention; and
Fig. 4 shows schematic views of an upper-left guide and an upper-right guide of a mold frame according to an exemplary embodiment of the present invention.

### DETAILED DESCRIPTION OF EXEMPLARY EMBODIMENTS

The present invention will now be described more fully with reference to the accompanying drawings, in which exemplary embodiments of the invention are shown. The invention may, however, be embodied in many different forms and should not be construed as being limited to the embodiments set forth herein.

Furthermore, relative terms such as "below," "beneath," or "lower," "above," and "upper" may be used herein to describe one element's relationship to another element as illustrated in the accompanying drawings. It will be understood that relative terms are intended to encompass different orientations of the device in addition to the orientation depicted in the accompanying drawings. For example, if the device in the accompanying drawings is turned over, elements described as being on the "lower" side of other elements would then be oriented on "upper" sides of the other elements. Similarly, if the device in one of the figures is turned over, elements described as "below" or "beneath" other elements would then be oriented "above" the other elements. Therefore, the exemplary terms "below" and "beneath" can, therefore, encompass both an orientation of above and below.

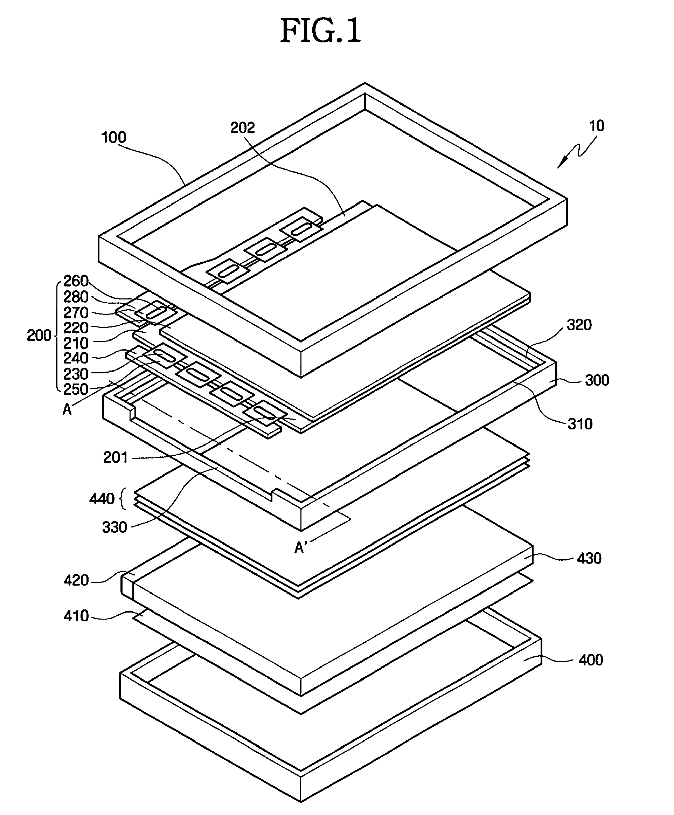

Fig. 1 is an exploded schematic view of an LCD module according to an exemplary embodiment of the present invention.

An LCD module 10 may include an LCD panel 200, a backlight unit, and a top chassis 100.

The LCD panel 200 may include a TFT substrate 210, a color filter substrate 220 facing the TFT substrate 210, and a liquid crystal material disposed between the two substrates 210, 220. Along a left side 201 of the LCD panel 200, the LCD panel 200 may include gate driver integrated circuits (ICs) which may be mounted directly on the TFT substrate 210 or on an external media 240, such as tape carrier package (TCP) or chip on film (COF) bonded to the TFT substrate 210. Along the left side 201, the LCD panel 200 may include a printed circuit board (PCB) 250 for transmitting gate signals. Along an upper side 202 substantially perpendicular to the left side 201, the LCD panel 200 may include data driver ICs 260 which may be mounted on an external media 270 such as the TCP or the COF bonded to the TFT substrate 210, and may include a PCB 280 for transmitting data signals.

A backlight unit may include a bottom chassis 400, a mold frame 300, and optical elements including a reflector 410, at least one light source 420, a light guiding plate 430, and at least one optical sheet 440. The optical elements may be received in the bottom chassis 400 and covered with the mold frame 300.

The LCD panel 200 is disposed on the mold frame 300, and the top chassis 100 covers the LCD panel 200 and the backlight unit.

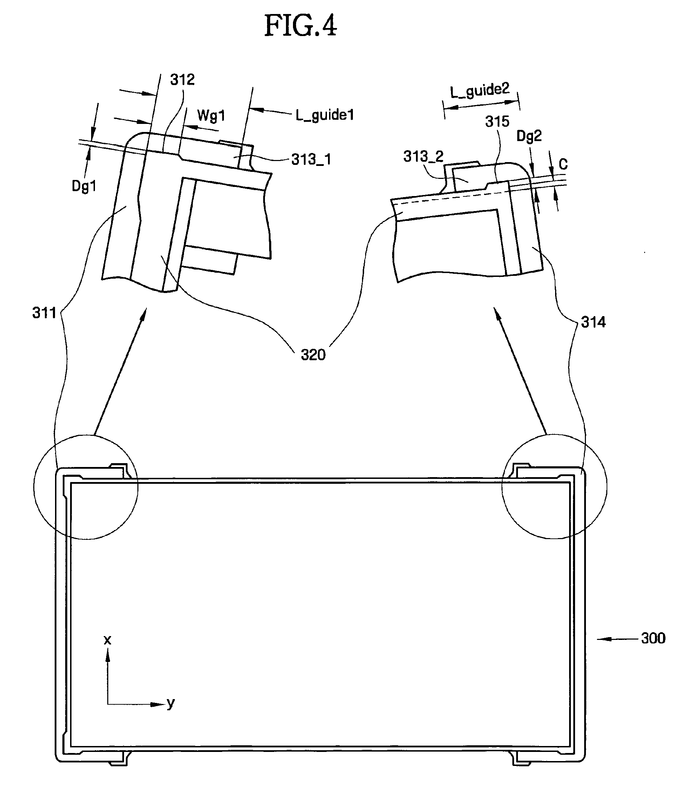

Referring to FIGS. 1 and 4, a space 330 in the guide 310 can be formed to receive a folded portion of the LCD panel 200. The folded portion may include, for example, the PCB. As such, a peripheral area of the LCD module 10 can be minimized. The guide 310 of the mold frame 300 can be divided into an upper-left guide 311 and an upper-right guide 314 which are not identical. Therefore, the LCD panel 200 and the mold frame 300 receiving the LCD panel 200 may be asymmetrical along a line parallel to the y-axis.

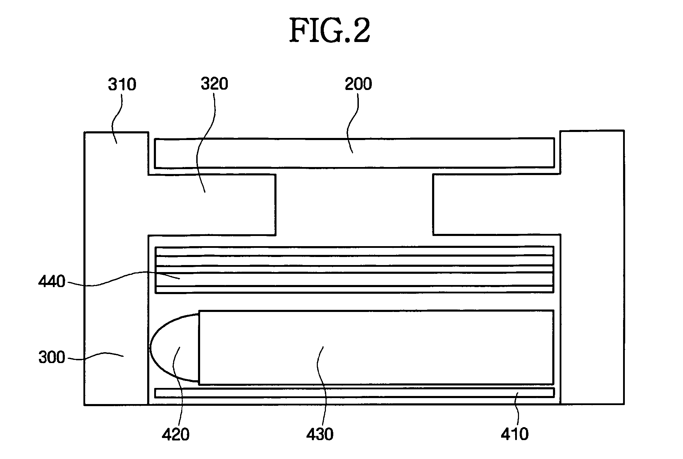

Referring to Fig. 2, the mold frame 300 receives the LCD panel 200 in the space formed by a support 320 of the mold frame 300 supporting the LCD panel 200 in a vertical direction with respect to a major axis of the LCD panel 200, and formed by guides 310 restricting the movement of the LCD panel 200 in a horizontal direction with respect to the major axis of the LCD panel 200.

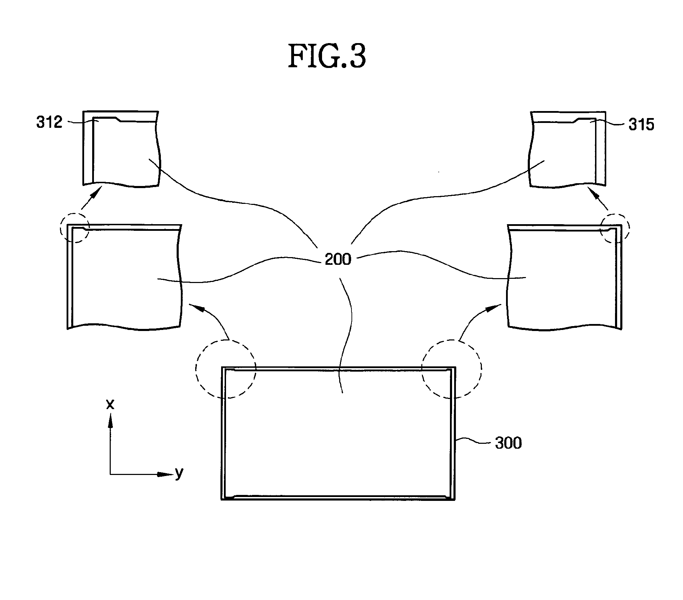

Referring to Figs. 1 and 3, when an outside impact is applied, the LCD panel 200 comprising substrates 210, 220 such as glass can be damaged, for example, near two upper and/or lower corners of the LCD panel 200. According to an exemplary embodiment of the present invention, the mold frame 300 may have grooves 312, 315 near the two upper corners and/or near the two lower corners of the mold frame 300. The grooves 312, 315 can alleviate the concentration of stress at the corners by preventing the corners of LCD panel 200 from colliding with the guides 310.

Fig. 4 shows a mold frame 300 according to an exemplary embodiment of the present invention. In an exemplary embodiment, the mold frame 300 can be formed asymmetrically with respect to an imaginary line crossing the LCD panel 200 in the y-axis direction.

Referring to Figs. 1 and 4, the mold frame 300 receives the LCD panel 200. The mold frame 300 may include the support 320, the upper-left guide 311, and the upper-right guide 314. The upper-left guide 311 may have a first groove 312, and the upper-right guide 314 may comprise a second groove 315. The upper-left guide 311 may have a first protrusion 313_1, and the upper-right guide 314 may have a second protrusion 313_2.

With regard to such LCD panel (200), it is noted that due to the asymmetricity, the stress distribution in the LCD panel is asymmetrical when impact in Y-direction is applied in the LCD panel. Referring to Fig. 4, the upper-left guide 311 includes a first width of groove Wg1, a first depth of groove Dg1, and a first length of guide L_guide1, and the upper-right guide 314 includes a second width of groove Wg2, a second depth of groove Dg2, and a second length of guide L_guide2. A gap C is formed between the second protrusion 313_2 and the LCD panel 200 received in the mold frame 320.

When an impact in the y-axis direction is applied to the LCD module 10, the asymmetric upper-left guide 311 and the upper-right guide 314 changes the stress distribution at the upper corners. In an exemplary embodiment, the difference in first width of groove Wg1 and the second width of groove Wg2, and the difference in first depth of groove Dgland the second depth of groove Dg2 affect the stress distribution at the upper corners. In an exemplary embodiment, the gap C between the protrusion 313_2 of the upper-right guide 314 and the LCD panel 200 received in the mold frame 320 can alleviate a deformation such as, for example, asymmetrical breakage at the two upper corners.

In an exemplary embodiment, the upper-left guide 311 and the upper-right guide 314 in the mold frame 300 may be asymmetrical with respect to a line parallel to the y-axis. In an exemplary embodiment, the first length of guide L_guide1 and the second length of guide L-guide 2 may be different from each other. The first width of groove Wg1 and the second width of groove Wg2 may be different from each other. A first depth of groove Dg1 and the second depth of groove Dg2 may be different from each other. In an exemplary embodiment, the second protrusion 315 may be disposed apart from the LCD panel 200 with the gap C.

According to exemplary embodiments of the present invention, the LCD module 10 includes the LCD panel 200 and the mold frame 300 receiving the LCD panel 200. The LCD panel 200 may be asymmetrical with respect to a line parallel to the y-axis. The mold frame 300 may include the support 320, the upper-left guide 311, and the upper-right guide 314. The LCD panel 200 can be located on the support 320. The upper-left guide 311 may be disposed on an upper-left portion of the support 320 and cover an upper-left corner of the LCD panel 200, and the upper-right guide 314 may be disposed on an upper-right portion of the support 320 and cover an upper-right corner of the LCD panel 200. The upper-left guide 311 and the upper-right guide 314 of the mold frame 300 may be asymmetrical with respect to a line parallel to the y-axis.

Exemplary embodiments of the present invention are described in connection with an LCD module including an LCD panel having gate driver ICs along the left side of the LCD panel and data driver ICs along the upper side of the LCD panel. However, exemplary embodiments of the present invention can also be applied to any LCD module having an asymmetrical panel and/or mold frame.

Although the exemplary embodiments of the present invention have been described herein with reference to the accompanying drawings, it is to be understood that the present invention should not be limited to those precise embodiments and that various other changes and modifications may be affected therein by one of ordinary skill in the related art without departing from the scope or spirit of the invention. All such changes and modifications are intended to be included within the scope of the invention as defined by the appended claims.

## Claims

1. A liquid crystal display (LCD) module comprising:
an LCD panel; and
a mold frame receiving the LCD panel, the mold frame comprising:
a support on which the LCD panel is located;
a first guide disposed near a first corner of the mold frame, the first guide receiving a first corner of the LCD panel; and
a second guide disposed near a second corner of the mold frame, the second guide receiving a second corner of the LCD panel,
wherein the first guide and the second guide are asymmetrical.

2. The LCD module of claim 1, wherein the first guide and the second guide have a different contour.

3. The LCD module of claim 1, wherein the first guide is disposed near an upper left corner of the mold frame, and the second guide is disposed near an upper right corner of the mold frame.

4. The LCD module of claim 3, wherein a horizontal length of the first guide and a horizontal length of the second guide are different from each other.

5. The LCD module of claim 1, wherein the first guide comprises a first groove, and the second guide comprises a second groove.

6. The LCD module of claim 5, wherein a width of the first groove and a width of the second groove are different from each other.

7. The LCD module of claim 5, wherein a depth of the first groove and a depth of the second groove are different from each other.

8. The LCD module of claim 5, wherein the second guide further comprises a protrusion disposed apart from the LCD panel by a gap.

9. A mold frame receiving an LCD panel, the mold frame comprising:
a support on which the LCD panel is located;
a first guide disposed near a first corner of the mold frame, the first guide receiving a first corner of the LCD panel, the first guide including a first groove having a first depth and a first width; and
an second guide disposed near a second corner of the mold frame, the second guide receiving a second corner of the LCD panel, the second guide including a second groove having a second depth and a second width,
wherein the first depth and the second depth are different from each other.

10. The mold frame of claim 9, wherein the first width and the second width are different from each other.

11. The mold frame of claim 9, wherein a length of the first guide and a length of the second guide are different from each other.

12. The mold frame of claim 9, wherein the second guide further comprises a protrusion disposed apart from the LCD panel by a gap.

13. The mold frame of claim 9, wherein the mold frame is disposed between an upper chassis and a lower chassis.

14. The mold frame of claim 9, wherein an optical member and a light guiding plate are disposed behind the LCD panel.

15. A mold frame for receiving an LCD panel, the mold frame comprising a first corner and a second corner, the first corner having a first groove recessed toward the edge of the first corner and the second corner having a second groove recessed toward the edge of the second corner, wherein the first groove is larger than the second groove.
